# EUROPÄISCHE PATENTANMELDUNG

(11) **EP 4 617 705 A2**
(43) Veröffentlichungstag der Anmeldung: **17.09.2025**
(21) Anmeldenummer: 25161503.5
(22) Anmeldetag: 04.03.2025
(51) Int. Cl.: G01S 7/00, G01S 17/86, G01S 17/89

(54) **BILDGEBUNGSSYSTEM**

(30) Priorität: 15.03.2024 DE 102024107477
(71) Anmelder: SICK AG, 79183 Waldkirch (DE)
(72) Erfinder: BAAK, Josef, 79183 Waldkirch (DE); KEMPERMANN, Govinda, 79183 Waldkirch (DE); NIERLICH, Michael, 79183 Waldkirch (DE); BRAUN, Simon, 79183 Waldkirch (DE); GERBER, Jan, 79183 Waldkirch (DE); BLATTMANN, Marc, 79183 Waldkirch (DE)
(74) Vertreter: Manitz Finsterwald Patent- und Rechtsanwaltspartnerschaft mbB

(57) **Zusammenfassung**

Die Erfindung betrifft ein Bildgebungssystem mit zumindest einem Kameramodul und einem Auswertungsmodul, wobei das Kameramodul einen lichtlaufzeitbasierten 3D-Bildsensor zur Erzeugung von 3D-Bilddaten und eine 2D-Kamera zur Erzeugung von 2D-Bilddaten umfasst, wobei das Kameramodul und das Auswertungsmodul über nur ein Verbindungskabel miteinander verbunden sind, wobei eine Energieversorgung des Kameramoduls über das Verbindungskabel erfolgt und das Kameramodul ausgebildet ist, die 3D-Bilddaten und die 2D-Bilddaten über das Verbindungskabel an das Auswertungsmodul zu übertragen, wobei das Auswertungsmodul ausgebildet ist, die 3D-Bilddaten und die 2D-Bilddaten zu verarbeiten.

## Beschreibung

Die vorliegende Erfindung betrifft ein Bildgebungssystem mit zumindest einem Kameramodul und einem Auswertungsmodul, wobei das Kameramodul einen lichtlaufzeitbasierten 3D-Bildsensor zur Erzeugung von 3D-Bilddaten und eine 2D-Kamera zur Erzeugung von 2D-Bilddaten umfasst.

In verschiedenen industriellen Anwendungen werden Bildgebungssysteme benötigt, die unterschiedliche Verfahren zur Bildgebung kombinieren. So kann ein zu überwachender Bereich beispielsweise mittels einer herkömmlichen Kamera, die ein 2D-Bild erzeugt, und gleichzeitig mit einem Tiefensensor überwacht werden. Durch den Tiefensensor, also beispielsweise den vorgenannten 3D-Bildsensor, kann dann eine Tiefeninformation erzeugt werden, wodurch sich industrielle Prozesse z.B. genauer überwachen lassen.

Die Kameramodule derartiger Bildgebungssysteme können auch als Sensorköpfe bezeichnet werden, wobei die Sensorköpfe möglichst klein und kompakt ausgebildet sein sollen, um ihre Anwendbarkeit in möglichst vielen Szenarien sicherzustellen. Überdies besteht die Anforderung, dass der Anschluss der Sensorköpfe/Kameramodule an das Auswertungsmodul möglichst einfach zu bewerkstelligen ist, um das Kameramodul beispielsweise auch am Ende eines Roboterarms (sogenannte "End-of-Arm"-Anwendung) einsetzen zu können.

Es kann daher als die der Erfindung zugrunde liegende Aufgabe angesehen werden, ein Bildgebungssystem mit einem kompakten und einfach an ein Auswertungsmodul anschließbaren Kameramodul zu schaffen.

Diese Aufgabe wird durch ein Bildgebungssystem gemäß Anspruch 1 gelöst.

Das erfindungsgemäße Bildgebungssystem umfasst zumindest ein Kameramodul und ein Auswertungsmodul, wobei das Kameramodul einen lichtlaufzeitbasierten 3D-Bildsensor zur Erzeugung von 3D-Bilddaten und eine 2D-Kamera zur Erzeugung von 2D-Bilddaten umfasst. Dabei sind das Kameramodul und das Auswertungsmodul über nur ein Verbindungskabel miteinander verbunden, wobei eine Energieversorgung des Kameramoduls (insbesondere ausschließlich) über das Verbindungskabel erfolgt und das Kameramodul ausgebildet ist, die 3D-Bilddaten und die 2D-Bilddaten (insbesondere ausschließlich) über das Verbindungskabel an das Auswertungsmodul zu übertragen. Das Auswertungsmodul ist schließlich ausgebildet, die 3D-Bilddaten und die 2D-Bilddaten zu verarbeiten.

Erfindungsgemäß wird also nur ein einziges Verbindungskabel zum elektrischen Anschluss (also für die Datenverbindung und die Energieversorgung) des Kameramoduls an das Auswertungsmodul benötigt, was das Anschließen des Kameramoduls an das Auswertungsmodul deutlich vereinfacht. Insbesondere bei den oben genannten "End-of-Arm"-Anwendungen oder in schwer zugänglichen Bereichen kann der Anschluss des Kameramoduls dadurch deutlich vereinfacht werden.

Über das nur eine Verbindungskabel erfolgt erfindungsgemäß sowohl die Energieversorgung des Kameramoduls als auch die Übertragung der Bilddaten. Um eine derartige Kombination der Übertragung über das Verbindungskabel zu ermöglichen, ist es notwendig, das Kameramodul energiesparend auszubilden und die Verarbeitung der Bilddaten in das Auswertungsmodul zu verlagern. Durch die Verlagerung von Funktionalität in das Auswertungsmodul ergibt sich nicht nur eine Energieeinsparung, sondern das Kameramodul kann auch kleiner und kompakter ausgebildet werden, was für die genannten industriellen Anwendungen ebenfalls vorteilhaft ist.

Unter den genannten 3D-Bilddaten sind von dem 3D-Bildsensor generierte Bilddaten zu verstehen, die insbesondere eine Tiefeninformation, beispielsweise also einen Abstand eines in den Bilddaten repräsentierten Objekts zu dem 3D-Bildsensor, enthalten. Die 2D-Bilddaten können "herkömmliche" Bilddaten sein, die ein herkömmliches fotografisches zweidimensionales Bild repräsentieren. Die 2D-Bilddaten können beispielsweise Farbinformationen oder Grauwertinformationen für eine Vielzahl von Bildpixeln umfassen.

Das Kameramodul und das Auswertungsmodul sind nur über das eine Verbindungskabel miteinander verbunden. Dies bedeutet, dass die Energieversorgung des Kameramoduls durch das Auswertungsmodul bevorzugt ausschließlich über das eine Verbindungskabel erfolgt. Ebenfalls bevorzugt ausschließlich wird nur das eine Verbindungskabel genutzt, um die 2D-Bilddaten und die 3D-Bilddaten von dem Kameramodul an das Auswertungsmodul zu übertragen. Es ist zwar möglich, dass das Kameramodul und das Auswertungsmodul an einer gemeinsamen Struktur, beispielsweise einem autonom fahrenden Fahrzeug angebracht sind. Allerdings sind das Kameramodul und das Auswertungsmodul voneinander separat und bevorzugt an unterschiedlichen Orten an der gemeinsamen Struktur angebracht und die Kommunikation und Energieversorgung erfolgt, wie ausgeführt, nur über das Verbindungskabel. Alternativ oder zusätzlich kann das Auswertungsmodul auch ortsfest angeordnet sein, wohingegen das Kameramodul bewegt wird, beispielsweise bei einer Befestigung des Kameramoduls an einem Roboterarm.

Unter der Verarbeitung der 3D-Bilddaten und der 2D-Bilddaten in dem Auswertungsmodul ist insbesondere zu verstehen, dass die 3D-Bilddaten und die 2D-Bilddaten miteinander fusioniert werden, um beispielsweise die 2D-Bilddaten zusätzlich mit Tiefeninformationen zu hinterlegen. Auch kann unter dem Verarbeiten verstanden werden, dass beispielsweise eine Objektdetektion oder eine Objektverfolgung in den 3D-Bilddaten und/oder den 2D-Bilddaten erfolgt.

Vorteilhafte Weiterbildungen der Erfindung sind in der Beschreibung, den Zeichnungen sowie den abhängigen Ansprüchen angegeben.

Gemäß einer ersten Ausführungsform ist das Auswertungsmodul ausgebildet, über das Verbindungskabel Betriebsinformationen an das Kameramodul zu übertragen, wobei die Betriebsinformationen bevorzugt eine Konfiguration für das Kameramodul und/oder einen Trigger zum Auslösen von Bildaufnahmen enthalten. Es besteht bevorzugt also auch ein Rückkanal zwischen dem Auswertungsmodul und den Kameramodulen bzw. dem Kameramodul, über welchen das Auswertungsmodul Daten an das Kameramodul übertragen kann.

Bei der von dem Auswertungsmodul an das Kameramodul übertragen Konfiguration kann es sich beispielsweise um Einstellungen handeln, welche Bildgröße der 3D-Bildsensor und/oder die 2D-Kamera liefern sollen, auf welche Farbtiefe die 2D-Kamera einzustellen ist und/oder welche Scanfrequenz und/oder welcher Tiefenbereich von dem 3D-Bildsensor verwendet werden soll.

Durch den genannten Trigger kann zumindest eine der Kameras, d.h. entweder der 3D-Bildsensor oder die 2D-Kamera dazu veranlasst werden, Bilddaten aufzunehmen und an das Auswertungsmodul zu übertragen. Durch den Trigger kann das Auswertungsmodul also steuern, wann der 3D-Bildsensor und/oder die 2D-Kamera Bilddaten erzeugen.

Gemäß einer weiteren Ausführungsform ist das Kameramodul ausgebildet, das Triggersignal direkt einem von dem 3D-Bildsensor und der 2D-Kamera zuzuleiten und dem anderen von 3D-Bildsensor und 2D-Kamera das Triggersignal verzögert zuzuleiten. Wie beschrieben, veranlasst das Triggersignal die Bildaufnahme, d.h. letztendlich die Erzeugung der 3D-Bilddaten und/oder der 2D-Bilddaten. Das Triggersignal kann von dem Auswertungsmodul stammen, sodass die Bilderzeugung beispielsweise an externe Ereignisse geknüpft werden kann. Insbesondere kann das Triggersignal in regelmäßigen, insbesondere gleichbleibenden, Abständen erzeugt werden. Die Erzeugung des Triggersignals ist dabei grundsätzlich auch durch das Kameramodul möglich.

Beispielsweise kann der 3D-Bildsensor das Triggersignal direkt oder unverzögert erhalten und somit ohne Verzögerung die Erzeugung von 3D-Bilddaten starten. Erst verzögert, insbesondere um einen vorbestimmten Verzögerungszeitraum, kann dann die 2D-Kamera die Erzeugung der 2D-Bilddaten beginnen. Durch die Verzögerung kann die Datenübertragung über das Verbindungskabel verbessert werden, wie nachfolgend noch ausgeführt.

Alternativ ist es auch möglich, dass der 3D-Bildsensor und die 2D-Kamera das Triggersignal gleichzeitig erhalten, wodurch dann eine gleichzeitige Bildaufnahme erfolgt und gleichzeitig mit der Erzeugung der 3D-Bilddaten und der 2D-Bilddaten begonnen wird.

Gemäß einer weiteren Ausführungsform ist in dem Kameramodul eine Verzögerungseinheit vorgesehen, welche das Triggersignal für den 3D-Bildsensor oder die 2D-Kamera verzögert. Dabei ist die von der Verzögerungseinheit hervorgerufene Verzögerung des Triggersignals derart gewählt, dass die unverzögert erzeugten Bilddaten bereits zumindest zum Teil (oder vollständig) über das Verbindungskabel an das Auswertungsmodul übertragen wurden. Dies bedeutet, dass beispielsweise die 3D-Bilddaten des 3D-Bildsensors ohne Verzögerung direkt erzeugt werden und auch direkt über das Verbindungskabel an das Auswertungsmodul übertragen werden. Erst wenn die 3D-Bilddaten zumindest zum Teil oder vollständig übertragen wurden, erhält die 2D-Kamera das Triggersignal und beginnt mit der Erzeugung der 2D-Bilddaten. Hierbei ergibt sich der Vorteil, dass z.B. bei bereits vollständiger Übertragung der 3D-Bilddaten die Übertragungskapazität des Verbindungskabels vollständig für die 2D-Bilddaten genutzt werden können. Die Übertragung über das Verbindungskabel wird damit vereinfacht. Auch ergibt sich der Vorteil, dass in dem Kameramodul z.B. für die üblicherweise sehr große Datenmenge der 2D-Bilddaten kein Zwischenspeicher (bzw. nur ein kleinerer Zwischenspeicher) vorgehalten werden muss, wodurch das Kameramodul wiederum kleiner kompakter und energiesparender ausgebildet werden kann.

Es versteht sich, dass auch die 2D-Kamera das Triggersignal unverzögert erhalten kann, wohingegen der 3D-Bildsensor dann das Triggersignal verzögert erhält. In diesem Fall werden dann bevorzugt zunächst die 2D-Bilddaten und erst danach die 3D-Bilddaten über das Verbindungskabel übertragen.

Insbesondere kann die Verzögerung, welche durch die Verzögerungseinheit erzeugt wird, auf einen festen bzw. konstanten Wert eingestellt sein. Dies ist insbesondere möglich, wenn die Datenraten und die Größe der Bilddaten, die von dem 3D-Bildsensor und der 2D-Kamera erzeugt werden, bekannt sind. Ebenfalls kann die Datenrate bekannt sein, mit der die Übertragung über das Verbindungskabel möglich ist, hierin auch maximale Übertragungsdatenrate genannt.

Alternativ ist es auch möglich, aus der aktuellen Konfiguration des Kameramoduls die jeweiligen Datenraten und/oder die Größe der Bilddaten zu ermitteln und den Verzögerungszeitraum im Betrieb zu berechnen.

Weiter alternativ oder zusätzlich ist es auch möglich, dass die Verzögerungseinheit ermitteln kann, ob Bilddaten über das Verbindungskabel gesendet werden und/oder welche Bilddaten über das Verbindungskabel gesendet werden. Die Verzögerungseinheit kann dann ausgebildet sein, beispielsweise nach einer vorbestimmten Größe der Bilddaten und/oder nach dem Ende der Bilddaten das Triggersignal weiterzuleiten (an diejenige Kamera, die noch keine Bilddaten erzeugt hat).

Gemäß einer weiteren Ausführungsform ist in den Kameramodulen ein Serializer und/oder in dem Auswertungsmodul ein Deserializer vorgesehen, wobei der Serializer über jeweils eine Datenverbindung mit dem 3D-Bildsensor und/oder der 2D-Kamera verbunden ist, wobei der Serializer die 3D-Bilddaten und/oder die 2D-Bilddaten in einen seriellen Datenstrom integriert, d.h. beispielsweise umwandelt, und über das Verbindungskabel überträgt.

Insbesondere empfängt der Deserializer den seriellen Datenstrom über das Verbindungskabel und extrahiert aus dem seriellen Datenstrom die 3D-Bilddaten und/oder die 2D-Bilddaten. Anders ausgedrückt, rekonstruiert der Deserializer die 3D-Bilddaten und/oder die 2D-Bilddaten aus dem seriellen Datenstrom.

Insbesondere können der Serializer, der Deserializer und das Verbindungskabel ein GMSL-System (Gigabit Multimedia Serial Link-System) bilden bzw. auf einem solchen System aufbauen.

Die vorstehend erläuterte Verzögerung des Triggersignals kann insbesondere dazu führen, dass die 3D-Bilddaten und die 2D-Bilddaten nacheinander am Serializer ankommen, sodass am Serializer bevorzugt kein Datenstau entsteht, sodass ein maximaler Durchsatz über das Verbindungskabel erzielt werden kann. Überdies kann sichergestellt werden, dass keine Bilddaten verloren gehen.

Weiterhin kann durch die absichtliche Verzögerung sichergestellt werden, dass die Bilddaten (also jedes Bild) einen eindeutigen und korrekten Zeitstempel aufweist. Dies kann die korrekte Verarbeitung der Bilddaten in dem Auswertungsmodul erleichtern. Überdies kann durch die Verzögerung sichergestellt werden, dass zu keinem Zeitpunkt die maximale Bandbreite bzw. Übertragungsrate des Verbindungskabels überschritten wird.

Gemäß einer weiteren Ausführungsform sind der Serializer und/oder der Deserializer ausgebildet, die 3D-Bilddaten und die 2D-Bilddaten in separaten virtuellen Kanälen über das Verbindungskabel zu übertragen. Hierdurch kann sich eine vereinfachte Handhabung ergeben, welche insbesondere in einem vereinfachten Integrieren und Extrahieren der Bilddaten in/aus dem seriellen Datenstrom besteht. Der Serializer und/oder der Deserializer können ein entsprechendes Protokoll zur Verfügung stellen, welches die virtuellen Kanäle ermöglicht.

Gemäß einer weiteren Ausführungsform ist der 3D-Bildsensor ausgebildet, die 3D-Bilddaten mit einer ersten maximalen Datenrate zu erzeugen und die 2D-Kamera ist ausgebildet, die 2D-Bilddaten mit einer zweiten maximalen Datenrate zu erzeugen. Überdies ist eine Datenübertragung über das Verbindungskabel mit einer maximalen Übertragungsdatenrate möglich. Insbesondere ist die erste Datenrate und/oder die zweite Datenrate einzeln größer als die maximale Übertragungsdatenrate. Alternativ oder zusätzlich sind die erste und zweite maximale Datenrate zusammengenommen größer als die maximale Übertragungsdatenrate.

Unter der maximalen Datenrate ist zu verstehen, welche Datenrate der 3D-Bildsensor oder die 2D-Kamera maximal erreichen können, beispielsweise bei maximaler Auflösung, maximaler Scanrate, maximaler Farbtiefe, maximalem Abtastbereich, etc. Die maximale Datenrate kann höher sein als die maximale Übertragungsdatenrate. Es können also, zumindest zeitweilig, mehr Daten von dem 3D-Bildsensor oder der 2D-Kamera erzeugt werden, als über das Verbindungskabel in einer Zeiteinheit übertragen werden können.

Sofern die erste und die zweite maximale Datenrate nur zusammengenommen größer als die maximale Übertragungsdatenrate ist, kann schon die vorgenannte Verzögerung ausreichen, die zu einer Übertragung nacheinander führt, um die maximale Übertragungsdatenrate nicht zu überschreiten. Falls auch die erste und/oder zweite maximale Datenrate alleine größer als die maximale Übertragungsdatenrate ist, so können noch zusätzliche Maßnahmen getroffen werden, wie nachfolgend ausgeführt.

Gemäß einer weiteren Ausführungsform ist die 2D-Kamera ausgebildet, Bilddaten lediglich für einen Teil ihres Sichtfelds zu erzeugen. Die 2D-Kamera kann also ausgebildet sein ein sogenanntes "Cropping" durchzuführen. Bevorzugt unterstützt die 2D-Kamera das Cropping nativ, d.h. es wird beispielsweise lediglich ein Teil ihres Bildsensors ausgelesen. Durch ein derartiges Cropping bereits auf der Ebene des Bildsensors kann eine Energieeinsparung erfolgen, da keine unnötigen Daten erzeugt werden. Überdies kann eine Einsparung an Übertragungsbandbreite erfolgen. Weiterhin ist es möglich, nacheinander verschiedene Teile des Bildsensors auszulesen, d.h. in verschiedenen Bildern verschiedene Bildbereiche darzustellen. Es kann beispielsweise nach einem jeweiligen Triggersignal der auszulesende Bildbereich geändert werden, sodass das Auswertungsmodul dann in die Lage versetzt wird, aus den 2D-Bilddaten ein Gesamtbild des überwachten Bereichs zu rekonstruieren.

Gemäß einer weiteren Ausführungsform ist ein mit dem 3D-Sensor verbundener Pufferspeicher für 3D-Bilddaten in den Kameramodulen vorgesehen, wobei das Kameramodul ausgebildet ist, die 3D-Bilddaten mit einer höheren Datenrate in den Pufferspeicher zu schreiben, als der Pufferspeicher die 3D-Bilddaten an den Serializer und/oder an das Auswertungsmodul überträgt. Der 3D-Sensor liefert üblicherweise sehr viele Daten in sehr kurzer Zeit, sogenannte Bursts. Diese maximale Datenrate des 3D-Sensors kann die maximale Übertragungsdatenrate deutlich übersteigen. Über den Pufferspeicher kann die Datenrate dann gesenkt werden, die Übertragung der 3D-Bilddaten über das Verbindungskabel wird bevorzugt also zeitlich gestreckt.

Insbesondere kann der 3D-Bildsensor die 3D-Bilddaten über eine MIPI-Schnittstelle ausgeben, insbesondere an den Pufferspeicher. Vom Pufferspeicher kann dann eine verlangsamte Ausgabe der 3D-Bilddaten erfolgen.

Der Pufferspeicher kann insbesondere Teil eines Prozessors, beispielsweise eines Signalprozessors, insbesondere eines digitalen Signalprozessors, DSP, sein. Weiter insbesondere nimmt der Prozessor eine Veränderung an den 3D-Bilddaten vor, beispielsweise eine Komprimierung und/oder eine Extraktion der Tiefeninformation. Die Tiefeninformation kann dann die bisherigen 3D-Bilddaten zumindest teilweise oder vollständig ersetzen, wobei die derart geänderten und/oder ersetzten 3D-Bilddaten über das Verbindungskabel übertragen werden.

Beispielsweise umfasst der 3D-Bildsensor eine integrierte Verarbeitungseinrichtung, z.B. einen DSP, welcher aus 3D-Rohdaten (gemessene Phaseninformation des ausgesandten und nachfolgend zurückgestreuten Lichts) die Tiefeninformation berechnet. Die 3D-Rohdaten können (zunächst) die 3D-Bilddaten sein. Die Verarbeitungseinrichtung kann weiterhin ungültige Pixelinformationen anhand veränderbarer Kriterien ausfiltern, Preprocessing- (vor der Umwandlung in Tiefeninformation) und Postprocessing-Schritte durchführen, welche insbesondere durch das Auswertungsmodul parametrierbar sind. Die Verarbeitungseinrichtung kann den 3D-Bilddaten Statusinformationen über die Pixeldaten (z.B. Metadaten, Konfidenzdaten) hinzufügen.

Durch die Berechnung der Tiefendaten aus den 3D-Rohdaten kann die Datenmenge deutlich reduziert werden, beispielsweise um den Faktor 9. Dadurch kann die Übertragung der 3D-Bilddaten über das Verbindungskabel vereinfacht werden.

Die Ausführungen für den Pufferspeicher und/oder den Prozessor gelten entsprechend auch für die 2D-Bilddaten, welche durch einen entsprechenden Pufferspeicher ebenfalls verlangsamt ausgegeben werden können. In beiden Fällen kann die Größe des Pufferspeichers derart dimensioniert sein, dass der Pufferspeicher nie vollläuft.

Bevorzugt werden die 2D-Bilddaten aber unverändert und/oder insbesondere nicht durch einen zur Verzögerung vorgesehenen Pufferspeicher verzögert über das Verbindungskabel übertragen.

Bis auf die Komprimierung der 3D-Bilddaten kann in dem Kameramodul bevorzugt keine Veränderung der Bilddaten erfolgen, wodurch das Kameramodul wiederum kompakter und energiesparender ausgebildet werden kann. Bevorzugt findet gar keine Veränderung der Bilddaten in dem Kameramodul statt, welche Auswirkungen auf den Informationsgehalt der 3D- und/oder 2D-Bilddaten besitzen (die Umsetzung mittels des Serializers verändert den Informationsgehalt der Bilddaten nicht).

Insbesondere kann die Verzögerungseinrichtung beispielsweise auch in den Prozessor integriert sein, sodass der Prozessor auch die Verzögerung erzeugt.

Gemäß einer weiteren Ausführungsform besitzen die 3D-Bilddaten und die 2D-Bilddaten unterschiedliche Formate und/oder unterschiedliche Größe, wobei die 3D-Bilddaten und/oder die 2D-Bilddaten bevorzugt in einem Datenformat vorliegen, welches jeweils ganze Bytes belegt. Die Übertragung der unterschiedlichen Datenformate erzeugt eine zusätzliche Komplexität, welcher aber durch die vorgenannten Maßnahmen der virtuellen Kanäle und der nacheinander erfolgenden Übertragung Rechnung getragen wird. Durch die Verwendung von Datenformaten, welche jeweils ganze Bytes nutzen, beispielsweise RAW16 oder RAW8, kann die Bandbreite im Verbindungskabel voll ausgenutzt werden.

Gemäß einer weiteren Ausführungsform umfasst das Kameramodul einen Energiespeicher, insbesondere eine Kondensatorbank, welche ausgebildet ist, über das Verbindungskabel erhaltene elektrische Energie zu speichern und bei einem Energiebedarf des Kameramoduls, welcher die über das Verbindungskabel übertragene elektrische Leistung übersteigt, die gespeicherte elektrische Energie abzugeben, wobei der Energiespeicher bevorzugt eine Begrenzungsschaltung aufweist, welche eine Geschwindigkeit mit der der Energiespeicher aufgeladen wird, begrenzt.

Die Energieübertragung über das Verbindungskabel ist begrenzt, wobei das Kameramodul insbesondere während der Bildaufnahme mehr elektrische Leistung benötigen kann, als über das Verbindungskabel zur Verfügung gestellt werden kann. In einem solchen Fall kann die zusätzliche benötigte Energie dann kurzfristig aus dem Energiespeicher gezogen werden. Ist die Bildaufnahme abgeschlossen, so kann der Energiespeicher dann wieder aufgeladen werden, um während der nächsten Bildaufnahme dann elektrische Energie zur Verfügung stellen zu können.

Die Begrenzungsschaltung beugt einer Überlastung des Verbindungskabels vor. Die Begrenzungsschaltung kann ausgebildet sein, das Aufladen des Energiespeichers beispielsweise mit einem konstanten bzw. dauerhaft eingestellten Maximalwert eines Ladestroms zu ermöglichen. Alternativ oder zusätzlich kann die Begrenzungsschaltung eine Sensorik umfassen, die den momentanen Energieverbrauch des Kameramoduls mit der maximal möglichen von dem Verbindungskabel lieferbaren Energiemenge vergleicht und die Differenz zum Aufladen des Energiespeichers nutzt (der Ladestrom wird dann dementsprechend eingestellt). Auf diese Weise kann eine optimale Ausnutzung der Energieübertragung über das Verbindungskabels erzielt werden.

Bevorzugt ist das Kameramodul derart ausgelegt, dass der gemittelte Energieverbrauch des Kameramoduls kleiner als die maximal lieferbare Energiemenge über das Verbindungskabel ist. Der gemittelte Energieverbrauch kann beispielsweise über mehrere Minuten während eines regulären Betriebs des Bildgebungssystems ermittelt werden. Insbesondere beträgt der gemittelte Energieverbrauch zumindest 60 %, insbesondere zumindest 70 %, weiter insbesondere zumindest 80 %, der maximal über das Verbindungskabel lieferbaren Energiemenge. Andererseits beträgt der gemittelte Energieverbrauch aber maximal 80 %, insbesondere maximal 90 %, insbesondere maximal 95 % der maximal über das Verbindungskabel übertragbaren Energiemenge. Im Mittel darf der Energieverbrauch nicht die maximal über das Verbindungskabel lieferbare Energiemenge übersteigen, da sonst keine Energiereserven für das Aufladen des Energiespeichers mehr vorhanden sind.

Aus diesem Grund ist das Kameramodul möglichst energiesparend zu betreiben. Beispielsweise kann vorgesehen sein, dass die 2D-Kamera ein Pixelbinning vornimmt und/oder der 3D-Sensor eine Reduzierung der Sendeleistung für ein ausgesandtes optisches Signal (d.h. das Sendelicht) vornimmt, insbesondere wenn der Überwachungsbereich des 3D-Sensors verkleinert wird. Weitere energiesparende Maßnahmen sind natürlich ebenfalls möglich.

Zur Übertragung der elektrischen Energie über das Verbindungskabel kann in dem Kameramodul und/oder in dem Auswertungsmodul jeweils ein Trennfilter vorgesehen sein, um die über das Verbindungskabel übertragenen Daten, d.h. die Bilddaten, von einem Signal der Energieversorgung zu trennen. Beispielsweise können die Daten mittels eines Hochpassfilters ausgefiltert werden, wohingegen die Energieversorgung über einen Tiefpassfilter erfolgen kann.

Gemäß einer weiteren Ausführungsform ist das Verbindungskabel ein Koaxialkabel oder ein Kabel mit einer einzelnen geschirmten "Twisted Pair" Leitung. Das Koaxialkabel kann insbesondere bezüglich der Komponenten, welche elektrisch sowohl mit dem Kameramodul als auch mit dem Auswertungsmodul verbunden sind, lediglich eine Abschirmung und einen Mittelleiter aufweisen. In entsprechender Weise kann die Twisted Pair Leitung ebenfalls nur zwei Leiter und gegebenenfalls eine Abschirmung aufweisen. Für die Datenübertragung und/oder die Energieübertragung werden bevorzugt nur der Mittelleiter und die Schirmung bzw. nur die Twisted Pair Leitungen und dessen Schirmung verwendet, sonst werden keine zusätzlichen elektrischen Verbindungen verwendet.

Bevorzugt ist die Masse bzw. die Schirmung mit dem Gehäuse des Kameramoduls und/oder des Auswertungsmoduls direkt oder niederohmig verbunden. Die Masse bzw. die Schirmung kann dabei mit einem Schutzleiteranschluss (PE-Anschluss) verbunden sein. Auf diese Weise lässt sich die EMV-Verträglichkeit des Bildgebungssystems erhöhen.

Wie oben bereits angedeutet, sind das Kameramodul und das Auswertungsmodul separat voneinander angeordnet und bevorzugt in separaten Gehäusen ausgebildet. Das Verbindungskabel kann beispielsweise eine Mindestlänge von 0,5, 1 oder 2 m besitzen. Das Verbindungskabel kann beispielsweise eine maximale Länge von 15 m, 20 m oder 30 m aufweisen. Das Auswertungsmodul und das Kameramodul besitzen bevorzugt jeweils eine Steckmöglichkeit, beispielsweise an deren Gehäuse, für einen Steckverbinder des Verbindungskabels. Das Verbindungskabel kann also insbesondere zwei Steckverbinder aufweisen, einen für das Kameramodul und einen für das Auswertungsmodul. Die Steckverbinder können lösbar an den Steckmöglichkeiten angebracht sein.

Gemäß einer weiteren Ausführungsform ist der 3D-Bildsensor ein TOF-Sensor (Time of Flight Sensor) oder ein iTOF-Sensor (indirect Time of Flight Sensor), insbesondere ein Laserscanner oder ein LIDAR (Light Detection and Ranging). Der 3D-Bildsensor kann insbesondere eine Sendelichtquelle aufweisen, welche Sendelicht in einem Überwachungsbereich aussendet. In dem Überwachungsbereich kann das Sendelicht auf Objekte treffen, welche das Sendelicht in Richtung des 3D-Bildsensors remittieren, also zurückstrahlen. Von dem 3D-Bildsensor erfasstes zurückgestrahltes Sendelicht kann dann zur Auswertung der Lichtlaufzeit (direkt oder indirekt) verwendet werden, um den Abstand zum Objekt zu ermitteln. Das Sendelicht kann dabei in verschiedene Bereiche des Überwachungsbereichs ausgesandt werden, um so ein Tiefenbild des Überwachungsbereichs mit einer Vielzahl von Bildpunkten zu erzeugen.

Gemäß einer weiteren Ausführungsform ist die 2D-Kamera eine monochrome Kamera oder eine Farbkamera und weist bevorzugt zumindest eine Auflösung von 4 Megapixel, 8 Megapixeln oder 12 Megapixeln auf. Die 2D-Kamera kann insbesondere eine Optik mit einem dahinterliegenden Bildsensor aufweisen. Durch die Optik wird ein Bild des Überwachungsbereichs auf den Bildsensor projiziert. Der Bildsensor kann die genannte Auflösung von zumindest 4 Megapixeln, 8 Megapixeln oder 12 Megapixeln aufweisen und beispielsweise als CCD- oder CMOS-Sensor ausgebildet sein.

Gemäß einer weiteren Ausführungsform weisen der 3D-Bildsensor und die 2D-Kamera denselben Sichtbereich, einen überlappenden Sichtbereich oder aneinander angrenzende Sichtbereiche auf. Der vorstehend genannte Überwachungsbereich kann jeweils ein Teilbereich des Sichtbereichs sein. Der Sichtbereich bezeichnet den Bereich, welcher in den Bilddaten abgebildet werden kann. Bevorzugt sind beispielsweise zumindest 90 % des Raumwinkels des Sichtbereichs von 3D-Sensor und 2D-Kamera identisch. Bevorzugt sind die Sichtachsen, d.h. die Ausrichtung, des 3D-Bildsensors und der 2D-Kamera parallel.

Weiterer Gegenstand der Erfindung ist ein Kameramodul umfassend einen Lichtlaufzeitbasierten 3D-Bildsensor zur Erzeugung von 3D-Bilddaten und eine 2D-Kamera zur Erzeugung von 2D-Bilddaten, wobei das Kameramodul für den Betrieb mit nur einem Verbindungskabels ausgebildet ist, wobei eine Energieversorgung des Kameramoduls, bevorzugt ausschließlich, über das Verbindungskabel erfolgt und das Kameramodul ausgebildet ist, die 3D-Bilddaten und die 2D-Bilddaten, bevorzugt ausschließlich, über das Verbindungskabels übertragen.

Weiterer Gegenstand der Erfindung ist überdies ein erweitertes Bildgebungssystem mit einem Auswertungsmodul an welches zwei oder mehr Kameramodule der oben genannten Art jeweils über ein separates Verbindungskabel angeschlossen sind. Bei dem Auswertungsmodul kann es sich insbesondere um ein sogenanntes "Edge Device" handeln. Das Auswertungsmodul kann eine Recheneinrichtung zur Verarbeitung der Bilddaten aufweisen, wobei das Auswertungsmodul beispielsweise mehrere Deserializer umfassen kann, um mehrere der Kameramodule parallel an das Auswertungsmodul anzuschließen und parallel von mehreren Kameramodulen Bilddaten zu empfangen.

Schließlich betrifft die Erfindung auch ein Verfahren zum Betrieb eines Bildgebungssystems mit zumindest einem Kameramodul und einem Auswertungsmodul, wobei das Kameramodul einen lichtlaufzeitbasierten 3D-Bildsensor zur Erzeugung von 3D-Bilddaten und eine 2D-Kamera zur Erzeugung von 2D-Bilddaten umfasst, wobei das Kameramodul und das Auswertungsmodul über nur ein Verbindungskabel miteinander verbunden werden, wobei eine Energieversorgung des Kameramoduls, bevorzugt ausschließlich, über das Verbindungskabel erfolgt und das Kameramodul die 3D-Bilddaten und die 2D-Bilddaten, bevorzugt ausschließlich, über das Verbindungskabel an das Auswertungsmodul überträgt. Dabei verarbeitet das Auswertungsmodul die 3D-Bilddaten und die 2D-Bilddaten.

Die Ausführungen zu dem erfindungsgemäßen Bildgebungssystem gelten entsprechend für das erfindungsgemäße Kameramodul, dass erfindungsgemäß erweiterte Bildgebungsystem und das erfindungsgemäße Verfahren. Dies gilt insbesondere hinsichtlich Vorteilen und bevorzugten Ausführungsformen. Weiterhin versteht sich, dass die hierin genannten Merkmale und Ausführungsformen miteinander kombinierbar sind, sofern sich nicht explizit etwas Gegenteiliges ergibt.

Nachfolgend wird die Erfindung rein beispielhaft unter Bezugnahme auf die Zeichnungen beschrieben. Es zeigen:
- **Figur 1**: schematisch ein Bildgebungssystem mit einem Kameramodule und einem Auswertungsmodul;
- **Figur 2**: ein erweitertes Bildgebung System mit 3 Kameramodulen, welche an dasselbe Auswertungsmodul angeschlossen sind.

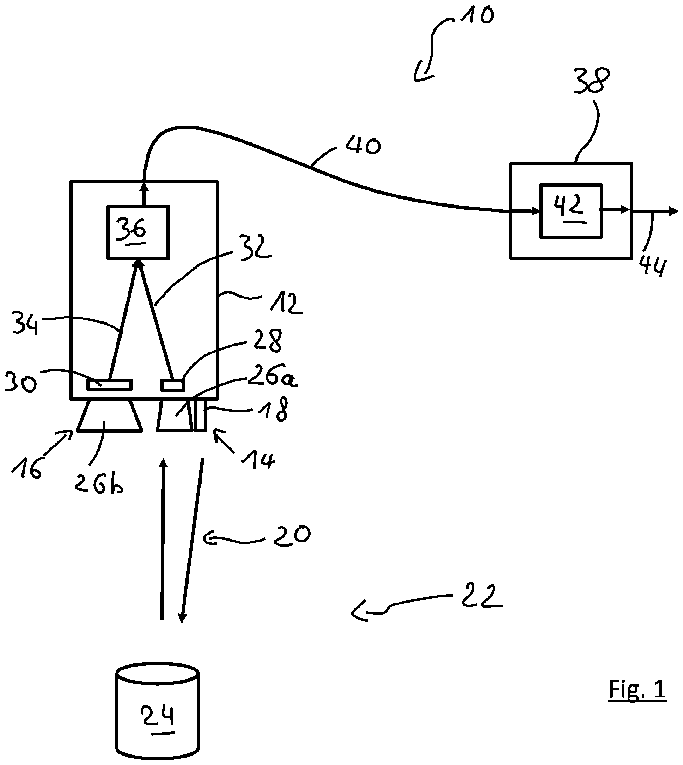

Figur 1 zeigt ein Bildgebungssystem 10 mit einem Kameramodul 12 (auch Sensorkopf genannt). Das Kameramodul 12 umfasst einen lichtlaufzeitbasierten 3D-Bildsensor 14 sowie eine 2D-Kamera 16.

Der 3D-Bildsensor 14 umfasst einen Lichtsender 18, welcher Sendelicht 20 in einen Überwachungsbereich 22 aussendet. Ein in dem Überwachungsbereich 22 angeordnetes Objekt 24 remittiert das Sendelicht 20, welches dann von dem 3D-Bildsensor mittels eines Objektivs 26a auf einen Bildsensor 28 geleitet wird. Die 2D-Kamera 16 umfasst ebenfalls ein Objektiv 26b sowie einen weiteren Bildsensor 30.

Der 3D-Bildsensor 14 und die 2D-Kamera 16 erzeugen auf diese Weise 3D-Bilddaten 32 und 2D-Bilddaten 34, welche an einen Serializer 36 übermittelt werden.

Das Bildgebungssystem 10 umfasst ferner ein Auswertungsmodul 38, welches mit dem Kameramodul 12 über ein einziges Verbindungskabel 40, insbesondere in Form eines Koaxialkabels, verbunden ist.

Der Serializer 36 ist mit dem Verbindungskabel 40 gekoppelt, um die 3D-Bilddaten 32 und die 2D-Bilddaten 34 über das Verbindungskabel 40 an das Auswertungsmodul 38 zu übertragen.

In dem Auswertungsmodul 38 ist ein Deserializer 42 vorgesehen, der aus den über das Verbindungskabel 40 übertragenen Daten die 3D-Bilddaten 32 und die 2D-Bilddaten 34 rekonstruiert. In dem Auswertungsmodul 38 findet zudem eine Verarbeitung der 3D-Bilddaten 32 und der 2D-Bilddaten 34 statt, wobei ein Verarbeitungsergebnis 44 über eine (nicht gezeigte) Schnittstelle des Auswertungsmoduls 38 ausgegeben wird.

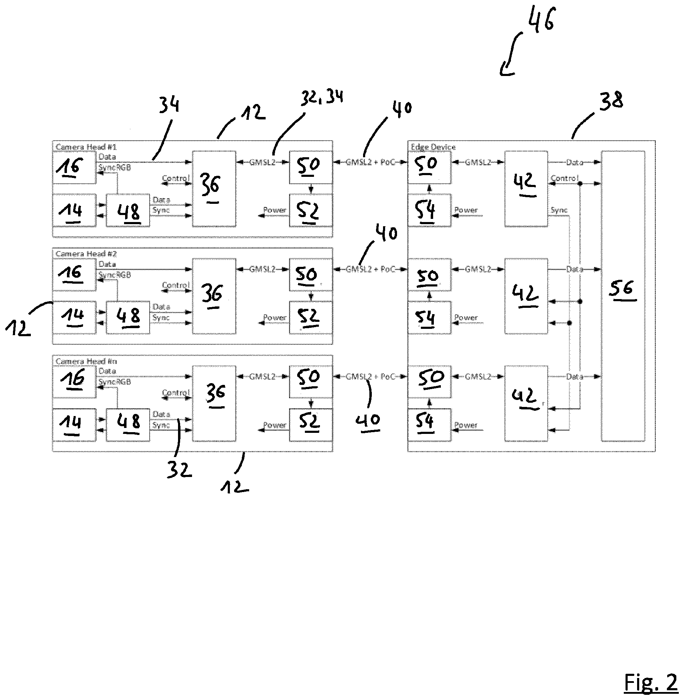

Figur 2 zeigt ein erweitertes Bildgebungssystem 46 mit drei Kameramodulen 12, welche jeweils nur über ein jeweiliges Verbindungskabel 40 an dasselbe Auswertungsmodul 38 angeschlossen sind. In Figur 2 sind noch mehr Details zum internen Aufbau der Kameramodule 12 und des Auswertungsmoduls 38 dargestellt.

Die Kameramodule 12 sind jeweils identisch aufgebaut. Es ist zu erkennen, dass der 3D-Bildsensor 14 mit einem Prozessor 48 in Form eines digitalen Signalprozessors gekoppelt ist. Der Prozessor 48 ist wiederum mit dem Serializer 36 verbunden. Der Prozessor 48 dient auch als Verzögerungseinheit und empfängt ein Triggersignal (hier *Sync* genannt) über den Serializer 36, welches der Prozessor 48 verzögert an die 2D-Kamera 16 weiterleitet (hier *SyncRGB* genannt). Alternativ kann auch der 3D-Bildsensor 14 selbst als Verzögerungseinheit dienen und das Triggersignal empfangen.

Der Prozessor 48 dient auch als Pufferspeicher für die 3D-Bilddaten 32, verlangsamt also die Übertragung der 3D-Bilddaten 32 von dem 3D-Bildsensor 14 an den Serizalizer 36.

Der Serializer 36 ist elektrisch mit dem Verbindungskabel 40 gekoppelt, wobei das Verbindungskabel zudem mit einem Trennfilter 50 elektrisch verbunden ist, welches über das Verbindungskabel 40 übertragenen Daten und die elektrische Stromversorgung voneinander trennt. Die elektrische Stromversorgung ist durch einen Energiespeicher 52 in Figur 2 dargestellt. Der Energiespeicher 52 umfasst eine Kondensatorbank sowie eine Begrenzungsschaltung, die die Geschwindigkeit des Aufladens der Kondensatorbank begrenzt.

Auf Seiten des Auswertungsmoduls 38 ist wiederum für jedes Verbindungskabel 40 ein einzelner Trennfilter 50 vorgesehen. Der Trennfilter 50 ist mit einer Energieversorgung 54 gekoppelt, welche elektrische Energie für die Kameramodule 12 in das Verbindungskabel 40 einspeist.

Die über das Verbindungskabel 40 erhaltenen Daten werden auch von den Trennfiltern 50 an drei Deserializer 42 übermittelt, welche die empfangenen 3D-Bilddaten 32 und 2D-Bilddaten 34 an eine Recheneinrichtung 56 des Auswertungsmoduls 38 weiterleiten. Die Recheneinrichtung 56 erzeugt wiederum Konfigurationssignale (in Figur 2 als *Control* bezeichnet) sowie das Triggersignal. Die Konfiguration sowie das Triggersignal können über die Verbindungskabel 40 von dem Ausbildungsmodul 38 an das Kameramodul 12 übertragen werden. Wie in Figur 2 gezeigt, kann das Triggersignal für alle Kameramodule 12 identisch sein, sodass die Bilderzeugung für alle Kameramodule 12 zur selben Zeit angestoßen wird.

Wird allen Kameramodulen 12 das Triggersignal gleichzeitig zugeleitet, so kann eines der Kameramodule 12 als Master fungieren. Da die Kameramodule 12 über die Lichtsender 18 Sendelicht 20 aussenden, besteht die Möglichkeit, dass sich verschiedene Kameramodule 12 gegenseitig stören. Um dies zu vermeiden, synchronisieren sich die übrigen Kameramodule 12 auf den Takt des Masters, wobei jeder 3D-Bildsensor 14 der übrigen Kameramodule 12 eine unterschiedliche Verzögerung verwendet, um die jeweiligen 3D-Bilddaten 32 zu erzeugen. Die unterschiedliche Verzögerung kann von den 3D-Bildsensoren 14 erzeugt werden. Alternativ ist es auch möglich, dass das Auswertungsmodul 38 den verschiedenen Kameramodulen 12 das Triggersignal zu unterschiedlichen Zeitpunkten überträgt, wobei die Verzögerung zwischen den einzelnen Kameramodulen 12 bevorzugt gleich ist.

Aufgrund der Übertragung der Bilddaten und der elektrischen Energie für die Kameramodule 12 mittels lediglich jeweils einem Verbindungskabel 40 kann ein flexibler und einfacher Einsatz der Bildgebungssysteme 10 ermöglicht werden. Durch die Verwendung eines einzigen Auswertungsmoduls 38 für mehrere Kameramodule 12 kann der Aufwand beim Einsatz mehrere Kameramodule 12 noch weiter reduziert werden.

### Bezugszeichenliste

10 Bildgebungssystem
12 Kameramodul
14 3D-Bildsensor
16 2D-Kamera
18 Lichtsender
20 Sendelicht
22 Überwachungsbereich
24 Objekt
26 Objektiv
28 Bildsensor
30 Bildsensor
32 3D-Bilddaten
34 2D-Bilddaten
36 Serializer
38 Auswertungsmodul
40 Verbindungskabel
42 Deserializer
44 Verarbeitungsergebnis
46 erweitertes Bildgebungssystem
48 Prozessor
50 Trennfilter
52 Energiespeicher
54 Energieversorgung
56 Recheneinrichtung

## Patentansprüche

1. Bildgebungssystem (10) mit zumindest einem Kameramodul (12) und einem Auswertungsmodul (38), wobei das Kameramodul (12) einen lichtlaufzeitbasierten 3D-Bildsensor (14) zur Erzeugung von 3D-Bilddaten (32) und eine 2D-Kamera (16) zur Erzeugung von 2D-Bilddaten (34) umfasst, wobei das Kameramodul (12) und das Auswertungsmodul (38) über nur ein Verbindungskabel (40) miteinander verbunden sind, wobei eine Energieversorgung des Kameramoduls (12) über das Verbindungskabel (40) erfolgt und das Kameramodul (12) ausgebildet ist, die 3D-Bilddaten (32) und die 2D-Bilddaten (34) über das Verbindungskabel (40) an das Auswertungsmodul (38) zu übertragen,
wobei das Auswertungsmodul (38) ausgebildet ist, die 3D-Bilddaten (32) und die 2D-Bilddaten (34) zu verarbeiten.

2. Bildgebungssystem (10) nach Anspruch 1,
wobei das Auswertungsmodul (38) ausgebildet ist, über das Verbindungskabel (40) Betriebsinformationen an das Kameramodul (12) zu übertragen, wobei die Betriebsinformationen bevorzugt eine Konfiguration für das Kameramodul (12) und/oder ein Triggersignal zum Auslösen von Bildaufnahmen enthalten.

3. Bildgebungssystem (10) nach Anspruch 1 oder 2,
wobei das Kameramodul (12) ausgebildet ist, das Triggersignal direkt einem von dem 3D-Bildsensor (14) und der 2D-Kamera (16) zuzuleiten und dem anderen von 3D-Bildsensor (14) und 2D-Kamera (16) das Triggersignal verzögert zuzuleiten.

4. Bildgebungssystem (10) nach einem der vorstehenden Ansprüche, wobei in dem Kameramodul (12) eine Verzögerungseinheit (48) vorgesehen ist, welche das Triggersignal für den 3D-Bildsensor (14) oder die 2D-Kamera (16) verzögert, wobei die von der Verzögerungseinheit (48) hervorgerufene Verzögerung des Triggersignals derart gewählt ist, dass die unverzögert erzeugten Bilddaten (32, 34) bereits zumindest zum Teil oder vollständig über das Verbindungskabel (40) an das Auswertungsmodul (38) übertragen wurden.

5. Bildgebungssystem (10) nach einem der vorstehenden Ansprüche, wobei in dem Kameramodul (12) ein Serializer (36) und/oder in dem Auswertungsmodul (38) ein Deserializer (42) vorgesehen ist, wobei der Serializer (36) über jeweils eine Datenverbindung mit dem 3D-Bildsensor (14) und/oder der 2D-Kamera (16) verbunden ist, wobei der Serializer (36) die 3D-Bilddaten (32) und/oder die 2D-Bilddaten (34) in einen seriellen Datenstrom integriert (umwandelt) und über das Verbindungskabel (40) überträgt, wobei der Deserializer (42) den seriellen Datenstrom über das Verbindungskabel (40) empfängt und aus dem seriellen Datenstrom die 3D-Bilddaten (32) und/oder die 2D-Bilddaten (34) extrahiert.

6. Bildgebungssystem (10) nach Anspruch 5,
wobei der Serializer (36) und/oder der Deserializer (42) ausgebildet sind, die 3D-Bilddaten (32) und die 2D-Bilddaten (34) in separaten virtuellen Kanälen über das Verbindungskabel (40) zu übertragen.

7. Bildgebungssystem (10) nach einem der vorstehenden Ansprüche,
wobei der 3D-Bildsensor (14) ausgebildet ist, die 3D-Bilddaten (32) mit einer ersten maximalen Datenrate zu erzeugen und die 2D-Kamera (16) ausgebildet ist, die 2D-Bilddaten (34) mit einer zweiten maximalen Datenrate zu erzeugen,
wobei eine Datenübertragung über das Verbindungskabel (40) mit einer maximalen Übertragungsdatenrate möglich ist,
wobei die ersten Datenrate und/oder die zweite Datenrate einzeln größer als die maximale Übertragungsdatenrate ist, und/oder wobei die erste und zweite maximale Datenrate zusammengenommen größer als die maximale Übertragungsdatenrate sind.

8. Bildgebungssystem (10) nach einem der vorstehenden Ansprüche, wobei die 2D-Kamera (16) ausgebildet ist, 2D-Bilddaten (34) lediglich für einen Teil ihres Sichtfelds zu erzeugen.

9. Bildgebungssystem (10) nach einem der vorstehenden Ansprüche, wobei ein mit dem 3D-Bildsensor (14) verbundener Pufferspeicher für 3D-Bilddaten (32) in dem Kameramodul (12) vorgesehen ist, wobei das Kameramodul (12) ausgebildet ist, die 3D-Bilddaten (32) mit einer höheren Datenrate in den Pufferspeicher zu schreiben, als der Pufferspeicher die 3D-Bilddaten (32) an den Serializer (36) überträgt.

10. Bildgebungssystem (10) nach einem der vorstehenden Ansprüche, wobei die 3D-Bilddaten (32) und die 2D-Bilddaten (34) unterschiedliche Formate und/oder unterschiedliche Größe besitzen, wobei die 3D-Bilddaten (32) und/oder die 2D-Bilddaten (34) in einem Datenformat vorliegen, welches jeweils ganze Bytes belegt.

11. Bildgebungssystem (10) nach einem der vorstehenden Ansprüche, wobei das Kameramodul (12) einen Energiespeicher (52) umfasst, insbesondere eine Kondensatorbank, welcher ausgebildet ist, über das Verbindungskabel (40) erhaltene elektrische Energie zu speichern und bei einem Energiebedarf des Kameramoduls (12), welcher die über das Verbindungskabel (40) übertragene elektrische Leistung übersteigt, die gespeicherte elektrische Energie abzugeben, wobei der Energiespeicher (52) eine Begrenzungsschaltung aufweist, welche eine Geschwindigkeit mit der der Energiespeicher aufgeladen wird, begrenzt.

12. Bildgebungssystem (10) nach einem der vorstehenden Ansprüche, wobei das Verbindungskabel (40) ein Koaxialkabel oder ein Kabel mit einer einzelnen geschirmten Twisted-Pair Leitung ist.

13. Bildgebungssystem (10) nach einem der vorstehenden Ansprüche, wobei der 3D-Bildsensor (14) ein TOF-Sensor oder ein iTOF-Sensor ist, insbesondere ein Laserscanner oder ein LIDAR, und/oder wobei die 2D-Kamera (16) eine monochrome Kamera oder eine Farbkamera ist und bevorzugt zumindest eine Auflösung von 4 Megapixeln oder 8 Megapixeln aufweist.

14. Kameramodul (12) umfassend einen lichtlaufzeitbasierten 3D-Bildsensor (14) zur Erzeugung von 3D-Bilddaten (32) und eine 2D-Kamera (16) zur Erzeugung von 2D-Bilddaten (34),
wobei das Kameramodul (12) für den Betrieb mit nur einem Verbindungskabel (40) ausgebildet ist, wobei eine Energieversorgung des Kameramoduls (12) über das Verbindungskabel (40) erfolgt und das Kameramodul (12) ausgebildet ist, die 3D-Bilddaten (32) und die 2D-Bilddaten (34) über das Verbindungskabel (40) zu übertragen.

15. Verfahren zum Betrieb eines Bildgebungssystems (10) mit zumindest einem Kameramodul (12) und einem Auswertungsmodul (38), wobei das Kameramodul (12) einen lichtlaufzeitbasierten 3D-Bildsensor (14) zur Erzeugung von 3D-Bilddaten (32) und eine 2D-Kamera zur Erzeugung von 2D-Bilddaten (34) umfasst,
wobei das Kameramodul (12) und das Auswertungsmodul (38) über nur ein Verbindungskabel (40) miteinander verbunden werden, wobei eine Energieversorgung des Kameramoduls (12) über das Verbindungskabel (40) erfolgt und das Kameramodul (12) die 3D-Bilddaten (32) und die 2D-Bilddaten (34) über das Verbindungskabel (40) an das Auswertungsmodul (38) überträgt, wobei das Auswertungsmodul (38) die 3D-Bilddaten (32) und die 2D-Bilddaten (34) verarbeitet.
